# EUROPEAN PATENT APPLICATION

(11) **EP 3 674 888 A1**
(43) Date of publication of application: **01.07.2020**
(21) Application number: 19193110.4
(22) Date of filing: 22.08.2019
(51) Int. Cl.: G06F 8/65, G06F 21/57

(54) **INFORMATION PROCESSING APPARATUS AND METHOD**

(30) Priority: 25.12.2018 JP 2018241581
(71) Applicant: Toshiba Tec Kabushiki Kaisha, 141-8562 Tokyo (JP)
(72) Inventor: TSUJIMURA, Hisashi, Shinagawa-ku, Tokyo 141-8562 (JP); MATSUDA, Okiharu, Shinagawa-ku, Tokyo 141-8562 (JP)
(74) Representative: Bandpay & Greuter

(57) **Abstract**

According to one embodiment, an information processing apparatus includes: a non-volatile first memory configured to store first data relating to an operation of the information processing apparatus; a main memory configured to store the first data loaded from the first memory; a receiving unit configured to receive second data from an external apparatus that manages the second data for updating the first data; a non-volatile second memory configured to store the second data received by the receiving unit; and an update unit configured to update the first data stored in the first memory using the second data stored in the second memory while the information processing apparatus is operating based on the first data loaded to the main memory.

## Description

### FIELD

Embodiments described herein relate generally to an information processing apparatus and a method.

### BACKGROUND

In the related art, when data such as a firmware is updated, an information processing apparatus such as a printing apparatus transitions to a specific operation mode for update. In this case, there is a problem in that, while data is updating, the information processing apparatus cannot be used normally.

In order to solve the problem, a technique is disclosed in which the device can be used during update of a firmware by duplicating a memory area that stores the firmware, updating another memory area other than a memory area as a start-up target during the update of the firmware, and setting the other memory area as a start-up target during the next start-up.

However, in the technique of the related art, the memory area as a start-up target is switched every update, and thus a process relating to update may become complicated.

### SUMMARY OF INVENTION

To solve such problem, there is provided an information processing apparatus, comprising:
a non-volatile first memory configured to store first data relating to an operation of the information processing apparatus;
a main memory configured to store the first data loaded from the first memory;
a receiving unit configured to receive second data from an external apparatus that manages the second data for updating the first data;
a non-volatile second memory configured to store the second data received by the receiving unit; and
an update unit configured to update the first data stored in the first memory using the second data stored in the second memory while the information processing apparatus is operating based on the first data loaded to the main memory.

Preferably, the information processing apparatus further comprises:
a determination unit configured to determine whether or not the second data is normal or abnormal based on a checksum of the second data stored in the second memory, wherein
when the determination unit determines that the second data is abnormal, the receiving unit receives the second data again from the external apparatus.

Preferably, the receiving unit receives the second data, that is divided into a plurality of blocks, block by block, and
the determination unit determines whether or not the second data is normal block by block based on a checksum of each of the plurality of blocks stored in the second memory.

Preferably still, when power of the information processing apparatus is turned off while the first data is updating, the update unit inhibits start-up of the information processing apparatus based on the first data during the next power-on and updates the first data stored in the first memory again using the second data stored in the second memory.

Preferably yet, the update unit restarts the information processing apparatus after the update of the first data stored in the first memory is completed.

Suitably, the receiving unit is further configured to compare a version of a first firmware stored in the first memory and a version of a latest firmware managed in the external apparatus to each other.

Suitably still, the main memory is a CPU, the first memory is an EEPROM, the second memory is an EEPROM, and the receiving unit is ASIC.

The invention also relates to a method for causing a computer of an information processing apparatus including a main memory to function as:
a receiving unit configured to receive second data for updating first data from an external apparatus, the first data being stored in a non-volatile first memory and relating to an operation of the information processing apparatus;
a memory configured to store the second data received from the receiving unit in a non-volatile second memory; and
an update unit configured to update the first data stored in the first memory using the second data stored in the second memory while the information processing apparatus is operating based on the first data loaded to the main memory of the information processing apparatus.

Preferably, the main memory further functions as:
a determination unit configured to determine whether or not the second data is normal or abnormal based on a checksum of the second data stored in the second memory, wherein
when the determination unit determines that the second data is abnormal, the receiving unit receives the second data again from the external apparatus.

Preferably still, the receiving unit receives the second data, that is divided into a plurality of blocks, block by block, and
the determination unit determines whether or not the second data is normal block by block based on a checksum of each of the plurality of blocks stored in the second memory.

Preferably yet, when the power of the information processing apparatus is turned off while the first data is updating, the main memory further functions as:
the update unit inhibits start-up of the information processing apparatus based on the first data during the next power-on and updates the first data stored in the first memory again using the second data stored in the second memory.

Suitably, the main memory further functions as:
the update unit restarts the information processing apparatus after the update of the first data stored in the first memory is completed.

Suitably still, the receiving unit is further configured to compare a version of a first firmware stored in the first memory and a version of a latest firmware managed in the external apparatus to each other.

The invention also concerns a computer program comprising instructions which, when the program is executed by a computer, cause the computer to carry out the steps of the method described above.

The invention further relates to a computer-readable medium having stored thereon the computer program above.

The invention also relates to a method for updating an information processing apparatus, comprising:
receiving second data for updating first data from an external apparatus, the first data being stored in a non-volatile first memory and relating to an operation of the information processing apparatus;
storing the second data received in a non-volatile second memory;
updating the first data stored in the first memory using the second data stored in the second memory; and
while at least one of the receiving second data, storing the second data, and updating the first data, operating the information processing apparatus based on the first data loaded to a main memory.

Preferably, operating the information processing apparatus comprises at least one of scanning, copying, and printing.

Preferably still, the method further comprises:
determining whether or not the second data is normal or abnormal based on a checksum of the second data stored in the second memory, wherein
when determining that the second data is abnormal, the receiving the second data again from the external apparatus.

Preferably yet, the method further comprises:
receiving the second data, that is divided into a plurality of blocks, block by block; and
determining whether or not the second data is normal block by block based on a checksum of each of the plurality of blocks stored in the second memory.

Suitably, when the power of the information processing apparatus is turned off while the first data is updating, further comprising:
inhibiting start-up of the information processing apparatus based on the first data during the next power-on and updating the first data stored in the first memory again using the second data stored in the second memory.

Suitably still, the method further comprises:
restarting the information processing apparatus after the update of the first data stored in the first memory is completed.

Suitably yet, the method further comprises:
comparing a version of a first firmware stored in the first memory and a version of a latest firmware stored in the second memory to each other.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram illustrating an example of a hardware configuration of a printing apparatus according to an embodiment;
FIG. 2 is a diagram illustrating an example of functional configurations of the printing apparatus;
FIG. 3 is a flowchart illustrating an example of a first update process that is executed by the printing apparatus; and
FIG. 4 is a flowchart illustrating an example of a second update process that is executed by the printing apparatus.

### DETAILED DESCRIPTION

Embodiments provide an information processing apparatus and a method in which data can be efficiently updated without stopping a normal operation.

In general, according to one embodiment, an information processing apparatus includes: a non-volatile first memory configured to store first data relating to an operation of the information processing apparatus; a main memory configured to store the first data loaded from the first memory; a receiving unit configured to receive second data from an external apparatus that manages the second data for updating the first data; a non-volatile second memory configured to store the second data received by the receiving unit; and an update unit configured to update the first data stored in the first memory using the second data stored in the second memory while the information processing apparatus is operating based on the first data loaded to the main memory.

Hereinafter, an embodiment of an information processing apparatus and a method will be described in detail with reference to the accompanying drawings. In the embodiment described below, an example in which a printing apparatus is used as an information processing apparatus will be described, but the embodiment is not limited thereto.

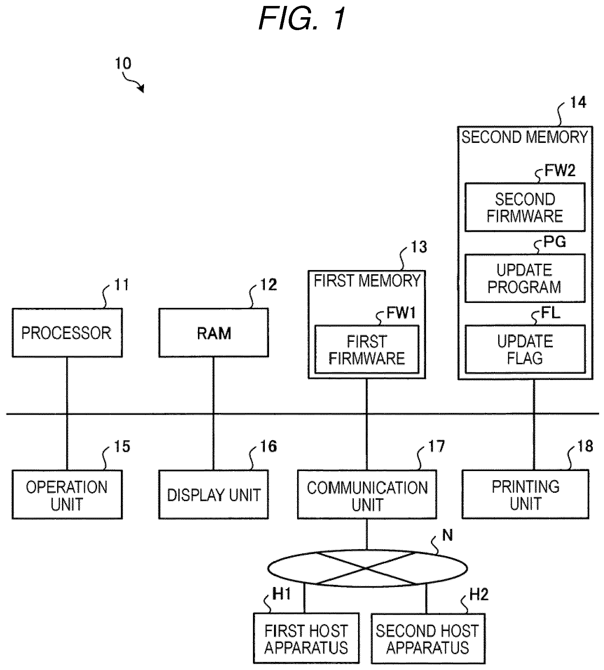

FIG. 1 is a diagram illustrating an example of a hardware configuration of a printing apparatus 10. The printing apparatus 10 is an example of the information processing apparatus and includes computer configurations such as a processor 11, a RAM (Random Access Memory) 12, a first memory 13, and a second memory 14.

The processor 11 is configured with, for example, a central processing unit (CPU) and integrally controls an operation of the printing apparatus 10. The RAM 12 is an example of a main memory and functions as a work area of the processor 11.

The first memory 13 and the second memory 14 are rewritable non-volatile storage devices such as a flash memory or an EEPROM (Electrically Erasable Programmable Read Only Memory). The first memory 13 stores a first firmware FW1 of the printing apparatus 10 as an example of the first data relating to the operation of the printing apparatus 10. The processor 11 implements an operation state (normal operation) where printing is executable by loading the first firmware FW1 stored in the first memory 13 to the RAM 12 during start-up of the printing apparatus 10.

In addition, the second memory 14 is a storage area used for updating the first firmware FW1. The second memory 14 is an example of second data and stores a second firmware FW2 for updating the first firmware FW1. In addition, the second memory 14 stores an update program PG relating to an update process of the first firmware FW1 and an update flag FL described below.

In the embodiment, in order to distinguish between the firmwares stored in the first memory 13 and the second memory 14, these types of firmware are separately represented by "the first firmware" and "the second firmware", respectively, for convenience. When the first firmware FW1 is updated, the first firmware FW1 and the second firmware FW2 have different versions. However, the first firmware FW1 and the second firmware FW2 may be the same as each other for example, depending on a state immediately after the update.

The first memory 13 and the second memory 14 may be independent memory devices or may be different memory areas in the same memory device. In addition, the update program PG and the update flag FL may be stored in the first memory 13. In addition, the update program PG may be include in the firmware (the first firmware FW1 or the second firmware FW2) itself.

In addition, the printing apparatus 10 includes, for example, an operation unit 15, a display unit 16, a communication unit 17, and a printing unit 18. The operation unit 15 inputs various operations. For example, the operation unit 15 is implemented by an input device such as an operation button, a keyboard, or a touch panel. The display unit 16 displays various screens. For example, the display unit 16 is implemented by a display device such as a liquid crystal display or a touch panel display.

The communication unit 17 is a communication interface for connection to a network N such as a LAN (Local Area Network) or the Internet. Under the control of the processor 11, the communication unit 17 transmits and receives various data to and from an external apparatus connected to the network N.

For example, the communication unit 17 receives print data representing a character or an image as a printing target from the external apparatus (hereinafter, referred to as "first host apparatus HI"). In addition, for example, the communication unit 17 receives the latest firmware as the second firmware from an external apparatus (hereinafter, referred to as "second host apparatus H2") that stores and manages the latest firmware of the printing apparatus 10. A checksum for error detection is attached to the second firmware in advance.

The number of the first host apparatuses H1 connected to the network N is not particularly limited and may be plural. In addition, any one of the first host apparatuses H1 may be the second host apparatus H2.

Under the control of the processor 11, the printing unit 18 is a printer engine that executes printing on predetermined paper based on the print data transmitted from the external apparatus. A printing method or mechanism of the printing unit 18 is not particularly limited. For example, the printing unit 18 may adopt a thermal-transfer method, an ink jet method, or an electrophotographic method.

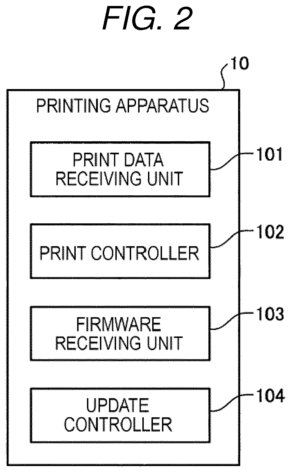

Next, functional configurations of the printing apparatus 10 will be described with reference to FIG. 2. FIG. 2 is a diagram illustrating the functional configurations of the printing apparatus 10.

As illustrated in FIG. 2, as the functional configurations, the printing apparatus 10 includes a print data receiving unit 101, a print controller 102, a firmware receiving unit 103, and an update controller 104.

Among the functional configurations, the print data receiving unit 101 and the print controller 102 are implemented by cooperation of the processor 11 and the first firmware FW1 stored in the first memory 13. In addition, a part or all of the firmware receiving unit 103 and the update controller 104 may be software configurations implemented by cooperation of the processor 11 and the update program PG stored in the second memory 14. In addition, a part or all of the firmware receiving unit 103 and the update controller 104 may be hardware configurations implemented by a processing circuit such as an ASIC (Application Specific Integrated Circuit).

The print data receiving unit 101 receives the print data transmitted from the first host apparatus H1 through the communication unit 17. The print controller 102 controls the printing unit 18 such that the print data received by the print data receiving unit 101 is printed on paper.

The firmware receiving unit 103 is an example of the receiving unit, the determination unit, and the memory. The firmware receiving unit 103 receives the latest firmware provided from the second host apparatus H2 through the communication unit 17. In addition, the firmware receiving unit 103 stores the received firmware in the second memory 14 as the second firmware FW2.

More specifically, the firmware receiving unit 103 temporarily stores the firmware received from the second host apparatus H2 in the RAM 12, and stores the firmware in the second memory 14 as the second firmware FW2 after the reception of the entire firmware is completed. Here, a method of receiving (acquiring) the firmware is not particularly limited, and various methods can be adopted.

For example, the firmware receiving unit 103 may receive the firmware pushed from the second host apparatus H2.

In addition, for example, the firmware receiving unit 103 may adopt a pull type acquisition method of receiving the firmware by requesting the second host apparatus H2 to receive the firmware per predetermined period of time.

In addition, when the pull type acquisition method is used, the firmware receiving unit 103 may receive the firmware for update after checking whether or not the firmware stored in the first memory 13 is the latest version. In this case, the firmware receiving unit 103 compares a version of the first firmware FW1 stored in the first memory 13 and a version of the latest firmware stored and managed in the second host apparatus H2 to each other. When the versions are different from each other, the firmware is requested.

As a result, only when the first firmware FW1 is not the latest version, the firmware receiving unit 103 can acquire the firmware from the second host apparatus H2. Therefore, the first firmware FW1 can be effectively updated. The latest version firmware may be pushed from the second host apparatus H2, or may be provided from the second host apparatus H2 by giving a request to the second host apparatus H2.

In addition, the firmware receiving unit 103 may receive the firmware from the second host apparatus H2 at a time or may receive the firmware that is divided into a plurality of blocks block by block. In the latter case, every time receiving one block, the firmware receiving unit 103 stores the received block in the second memory 14 such that the entire firmware (second firmware FW2) is stored in the second memory 14. The block divided from the firmware is not particularly limited and, for example, may be a block having a predetermined data volume or may be a program module.

In addition, the firmware receiving unit 103 has a recovery function of receiving the second firmware FW2 again when the received second firmware FW2 is abnormal.

Specifically, when the second firmware FW2 is stored in the second memory 14, the firmware receiving unit 103 determines whether or not the second firmware FW2 stored in the second memory 14 is normal based on a checksum of the second firmware FW2. The checksum is attached to the second firmware FW2 in advance. For example, when communication with the second host apparatus H2 is interrupted during the reception of the firmware, or when the power of the printing apparatus 10 is turned off during the reception of the firmware, the second firmware FW2 in an abnormal state where error occurs in the content of the data may be stored in the second memory 14. Therefore, the firmware receiving unit 103 executes the determination based on the checksum to determine whether or not the second firmware FW2 stored in the second memory 14 is normal.

When the firmware receiving unit 103 determines that error does not occur in the data based on the checksum, the firmware receiving unit 103 determines that the second firmware FW2 stored in the second memory 14 is normal. In this case, the firmware receiving unit 103 notifies the completion of the preparation of the update to the update controller 104 such that the update of the first firmware FW1 is executable.

On the other hand, when error is detected in the data, the firmware receiving unit 103 determines that the second firmware FW2 stored in the second memory 14 is abnormal. In this case, the firmware receiving unit 103 receives the firmware (second firmware FW2) again from the second host apparatus H2 without notifying the completion of the preparation of the update to the update controller 104.

This way, when the second firmware FW2 stored in the second memory 14 is abnormal, the firmware receiving unit 103 inhibits the update of the first firmware FW1 and receives the second firmware again. As a result, in the printing apparatus 10, the second firmware FW2 in an abnormal state is inhibited from being used for the update, and thus the first firmware FW1 can be updated safely and reliably.

In addition, when the second firmware FW2 is stored in the second memory 14 block by block, the firmware receiving unit 103 determines whether or not the second firmware FW2 is normal block by block based on a checksum attached to each of the blocks. The firmware receiving unit 103 receive a block where data error is detected again from the second host apparatus H2. As a result, in the printing apparatus 10, the second firmware FW2 can be received again block by block. Therefore, the time required to receive the second firmware FW2 again can be reduced.

It is preferable that a communication protocol used for the firmware receiving unit 103 to receive the firmware is different from that used for the print data receiving unit 101 to receive the print data. Here, the communication protocol refers to, for example, a communication service such as HTTP or FTP or a port number used in the communication service. By using different communication protocols, the reception of the print data and the reception of the firmware can be simultaneously executed. Therefore, the firmware can be received in the background of the printing process or the like without interrupting the operation of the printing apparatus 10. At least for the reception of the firmware, it is preferable that a communication protocol capable of secure communication is used.

The update controller 104 is an example of the update unit. The update controller 104 executes a process for updating the first firmware FW1 stored in the first memory 13 using the second firmware FW2 stored in the second memory 14. Specifically, the update controller 104 updates the firmware of the printing apparatus 10 by overwriting the first firmware FW1 stored in the first memory 13 with the second firmware FW2 stored in the second memory 14.

Here, the content of the first firmware FW1 stored in the first memory 13 is loaded to the RAM 12 during start-up of the printing apparatus 10. Therefore, the update controller 104 can update the first firmware FW1 in a state where the printing function of the printing apparatus 10 is maintained. By automatically or manually restarting the printing apparatus 10 after the update of the first firmware, the printing apparatus 10 can be operated based on the updated first firmware.

In addition, the update controller 104 has a recovery function of restarting the update during the next power-on when the update of the first firmware FW1 is interrupted during the power-on of the printing apparatus 10.

Specifically, during the update of the first firmware FW1, the update controller 104 sets the update flag FL representing that the firmware is updating to ON. The update controller 104 maintains the ON state of the update flag FL until the update of the first firmware FW1 is completed, and sets the update flag to OFF when the update of the first firmware FW1 is completed.

As a result, when the power of the printing apparatus 10 is turned off during the update of the first firmware FW1, whether or not the update of the first firmware FW1 is interrupted can be determined by checking the state of the update flag FL during the next power-on.

In addition, during the power-on of the printing apparatus 10, the update controller 104 checks the state of the update flag FL prior to the start-up of the first firmware FW1. Here, when the update flag FL is OFF, the update controller 104 determines that the update of the first firmware FW1 is unnecessary. In this case, by starting the first firmware FW1, the processor 11 loads the content of the first firmware FW1 to the RAM 12 and causes the printing apparatus 10 to transition to an operation state.

On the other hand, when the update flag FL is ON, the update controller 104 determines that the update of the first firmware FW1 is interrupted. In this case, the update controller 104 inhibits the start-up of the first firmware FW1, starts the printing apparatus 10 using the second firmware FW2 stored in the second memory 14, and updates the first firmware FW1 of the first memory 13. When the update of the first firmware is completed, the update controller 104 sets the update flag to OFF and then restarts the printing apparatus 10.

This way, even when the update of the first firmware FW1 is interrupted, the update controller 104 can update the first firmware FW1 during the next power-on. Therefore, the first firmware FW1 can be reliably updated. In addition, the update controller 104 can prevent the printing apparatus 10 from being started using an incomplete first firmware FW1 during the update. Therefore, the printing apparatus 10 can operate stably.

The update controller 104 may update the first firmware FW1 at a time or may update the first firmware FW1 block by block. In the latter case, the update controller 104 sequentially reads the second firmware FW2 stored in the second memory 14 block by block and sequentially updates the first firmware FW1 of the first memory 13 using the read block. In addition, when the update of the first firmware FW1 is interrupted, the update controller 104 maintains the complete block that is completely updated as it is, and executes update from an incomplete block that is being updated. Whether or not the block stored in the first memory 13 is complete can be determined based on the checksum attached to the block.

As a result, when the update of the first firmware FW1 is interrupted, the recovery process can be executed block by block. Therefore, the first firmware FW1 can be effectively updated.

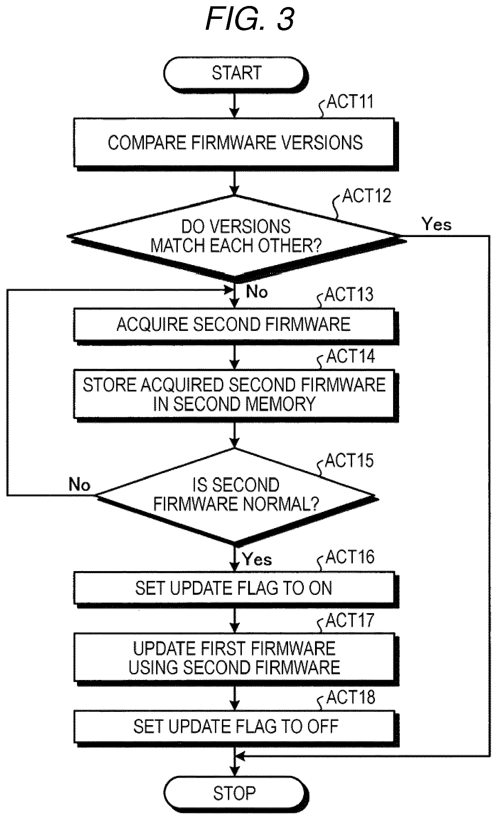

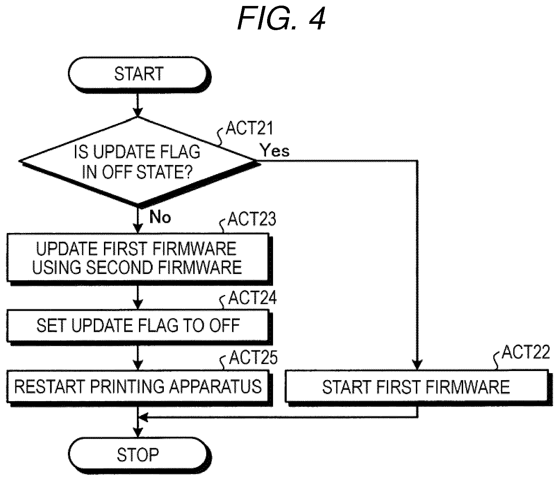

Hereinafter, the operation of the printing apparatus 10 relating to the update of the first firmware FW1 will be described with reference to FIGS. 3 and 4.

FIG. 3 is a flowchart illustrating an example of a first update process that is executed by the printing apparatus 10. This process is executed after the start-up of the first firmware FW1 stored in the first memory 13, that is, in the background of the normal operation that is executed by the printing apparatus 10.

First, the printing apparatus 10 starts the first update process in response to a predetermined start trigger. Here, the start trigger is not particularly limited and can be freely set. For example, an update start instruction given through the operation unit 15 may be used as the start trigger. In addition, for example, a notification of the version of the latest firmware given from the second host apparatus H2 may be used as the start trigger. In addition, for example, the reaching of a preset time and date may be used as the start trigger.

When the first update process is started, the firmware receiving unit 103 compares a version of the first firmware FW1 stored in the first memory 13 and a version of the latest firmware stored and managed in the second host apparatus H2 to each other (ACT 11). Here, when the versions match each other (ACT 12: Yes), the firmware receiving unit 103 determines that the update is unnecessary and ends the process. In ACT 12, the firmware receiving unit 103 causes the display unit 16 to display a message or the like notifying that the first firmware FW1 is the latest version.

In addition, when the versions are different from each other (ACT 12: No), the firmware receiving unit 103 acquires the second firmware FW2 from the second host apparatus H2 (ACT 13) and stores the acquired second firmware FW2 in the second memory 14 (ACT 14).

Next, the firmware receiving unit 103 determines whether or not the second firmware FW2 is normal based on the checksum of the second firmware FW2 stored in the second memory 14 (ACT 15).

Here, when error is detected in the data of the second firmware FW2, the firmware receiving unit 103 determines that the second firmware FW2 in an abnormal state is stored in the second memory 14 (ACT 15: No). In this case, the firmware receiving unit 103 returns the process to ACT 13 and receives the second firmware FW2 again. On the other hand, when error is not detected in the data of the second firmware FW2, the firmware receiving unit 103 determines that the second firmware FW2 in a normal state is stored in the second memory 14 (ACT 15: Yes). In this case, the firmware receiving unit 103 notifies the completion of the preparation of the update to the update controller 104.

When the notification of the completion of the preparation of the update is received, the update controller 104 sets the update flag FL to ON (ACT 16). Next, the update controller 104 starts updating the first firmware FW1 stored in the first memory 13 using the second firmware FW2 stored in the second memory 14 (ACT 17).

When the update of the first firmware FW1 is completed, the update controller 104 sets the update flag to OFF (ACT 18) and ends the process. In ACT 18, the update controller 104 may cause the display unit 16 to display a message that urges the printing apparatus 10 to restart.

FIG. 4 is a flowchart illustrating an example of a second update process that is executed by the printing apparatus 10. This process is executed during the power-on of the printing apparatus 10, that is, before the start-up of the first firmware FW1 stored in the first memory 13.

When the update controller 104 is validated during the power-on of the printing apparatus 10, the update controller 104 determines whether or not the update flag FL is OFF (ACT 21). When the update flag FL is OFF (ACT 21: Yes), the update controller 104 determines that the update is unnecessary and transitions to the ACT 22. In ACT 22, the processor 11 loads the updated firmware to the RAM 12 by starting the first firmware FW1 stored in the first memory 13 (ACT 22) and ends the process. As a result, in the printing apparatus 10, the print data receiving unit 101, the print controller 102, or the like is implemented, and the printing function can be used.

On the other hand, when the update flag FL is ON (ACT 21: NO), the update controller 104 determines that the update of the first firmware FW1 is interrupted. In this case, the update controller 104 starts updating the first firmware FW1 stored in the first memory 13 using the second firmware FW2 stored in the second memory 14 (ACT 23).

When the update of the first firmware FW1 is completed, the update controller 104 sets the update flag FL to OFF (ACT 24). The update controller 104 restarts the printing apparatus 10 in order to reflect the updated first firmware FW1 (ACT 25) and ends the process. Instead of restarting the printing apparatus 10, the update controller 104 may cause the display unit 16 to display a message that urges the printing apparatus 10 to restart.

As described above, in the printing apparatus 10, when the first firmware FW1 stored in the first memory 13 is updated, the second firmware FW2 for update that is received from the second host apparatus H2 is stored in the second memory 14. In the printing apparatus 10, while the printing apparatus 10 is operating based on the first firmware FW1 loaded to the RAM 12, the first firmware FW1 stored in the first memory 13 is updated using the second firmware FW2 stored in the second memory 14.

As a result, in the printing apparatus 10, the first firmware FW1 stored in the first memory 13 can be updated in the background of the operation of the printing apparatus 10. Therefore, the update process of the first firmware FW1 can be executed without stopping the normal operation of the printing apparatus 10. In addition, in the printing apparatus 10, among the first memory 13 and the second memory 14, the second memory 14 can be used only for the update of the first firmware. Therefore, the configuration relating to the update of the first firmware FW1 can be made simple. Accordingly, in the printing apparatus 10, the first firmware FW1 can be effectively updated.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

For example, in the embodiment, the example of updating the firmware is described. However, data as a target to be updated is not limited to this example. For example, various data such as an OS (Operating System), an application program, setting information, or font data may be used as the target to be updated. However, it is preferable that the data as a target to be updated is limited to data that is loaded to the RAM 12 and used during the normal operation of the printing apparatus 10.

In the description of the embodiment, when the update of the first firmware FW1 is interrupted, the update is executed again using the second firmware FW2 during the next start-up (power-on) (refer to FIG. 4 and the second update process). However, the update may be executed again under other conditions. For example, when the first firmware FW1 cannot start due to data corruption or the like, the update controller 104 may recover the first firmware FW1 by updating the first firmware FW1 of the first memory 13 using the second firmware FW2 of the second memory 14.

In the embodiment, the configuration and the operation of the printing apparatus are described as an example of the information processing apparatus, but the embodiment is not limited thereto. For example, a PC (Personal Computer), a server apparatus, or a POS (Point of Sales) terminal may be used as the information processing apparatus. In addition, a program that is executed by the printing apparatus 10 (information processing apparatus) according to the embodiment is embedded in a storage medium (for example, a ROM) included in a labeling device in advance, but the embodiment is not limited thereto. The program may be provided by being recorded in a computer-readable recording medium such as a CD-ROM, a flexible disk (FD), a CD-R, or a DVD (Digital Versatile Disk) in an installable or executable file format. Further, the storage medium is not limited to a medium separate from a computer or an embedded system and may be a storage medium that stores or temporarily stores a program downloaded through a LAN or the Internet.

In addition, the program that is executed by the printing apparatus 10 (information processing apparatus) according to the embodiment may be provided by storing the program in a computer connected to a network such as the Internet and downloading the program through the network. In addition, the program that is executed by the printing apparatus 10 (information processing apparatus) according to the embodiment may be provided or distributed through a network such as the Internet.

## Claims

1. An information processing apparatus, comprising:
a non-volatile first memory configured to store first data relating to an operation of the information processing apparatus;
a main memory configured to store the first data loaded from the first memory;
a receiving unit configured to receive second data from an external apparatus that manages the second data for updating the first data;
a non-volatile second memory configured to store the second data received by the receiving unit; and
an update unit configured to update the first data stored in the first memory using the second data stored in the second memory while the information processing apparatus is operating based on the first data loaded to the main memory.

2. The information processing apparatus according to claim 1, further comprising:
a determination unit configured to determine whether or not the second data is normal or abnormal based on a checksum of the second data stored in the second memory, wherein
when the determination unit determines that the second data is abnormal, the receiving unit receives the second data again from the external apparatus.

3. The information processing apparatus according to claim 2, wherein
the receiving unit receives the second data, that is divided into a plurality of blocks, block by block, and
the determination unit determines whether or not the second data is normal block by block based on a checksum of each of the plurality of blocks stored in the second memory.

4. The information processing apparatus according to any one of claims 1 to 3, wherein
when power of the information processing apparatus is turned off while the first data is updating, the update unit inhibits start-up of the information processing apparatus based on the first data during the next power-on and updates the first data stored in the first memory again using the second data stored in the second memory.

5. The information processing apparatus according to claim 4, wherein
the update unit restarts the information processing apparatus after the update of the first data stored in the first memory is completed.

6. The information processing apparatus according to any one of claims 1 to 5, wherein
the receiving unit is further configured to compare a version of a first firmware stored in the first memory and a version of a latest firmware managed in the external apparatus to each other.

7. The information processing apparatus according to any one of claims 1 to 6, wherein
the main memory is a CPU, the first memory is an EEPROM, the second memory is an EEPROM, and the receiving unit is ASIC.

8. A method for causing a computer of an information processing apparatus including a main memory to function as:
a receiving unit configured to receive second data for updating first data from an external apparatus, the first data being stored in a non-volatile first memory and relating to an operation of the information processing apparatus;
a memory configured to store the second data received from the receiving unit in a non-volatile second memory; and
an update unit configured to update the first data stored in the first memory using the second data stored in the second memory while the information processing apparatus is operating based on the first data loaded to the main memory of the information processing apparatus.

9. The method according to claim 8, the main memory further functions as:
a determination unit configured to determine whether or not the second data is normal or abnormal based on a checksum of the second data stored in the second memory, wherein
when the determination unit determines that the second data is abnormal, the receiving unit receives the second data again from the external apparatus.

10. The method according to claim 9, wherein
the receiving unit receives the second data, that is divided into a plurality of blocks, block by block, and
the determination unit determines whether or not the second data is normal block by block based on a checksum of each of the plurality of blocks stored in the second memory.

11. The method according to any one of claims 8 to 10, wherein
when the power of the information processing apparatus is turned off while the first data is updating, the main memory further functions as:
the update unit inhibits start-up of the information processing apparatus based on the first data during the next power-on and updates the first data stored in the first memory again using the second data stored in the second memory.

12. The method according to claim 11, the main memory further functions as:
the update unit restarts the information processing apparatus after the update of the first data stored in the first memory is completed.

13. The method according to any one of claims 8 to 12, wherein
the receiving unit is further configured to compare a version of a first firmware stored in the first memory and a version of a latest firmware managed in the external apparatus to each other.

14. A computer program comprising instructions which, when the program is executed by a computer, cause the computer to carry out the steps of the method according to any one of claims 8 to 13.

15. A computer-readable medium having stored thereon the computer program of claim 14.
